# NEUE EUROPÄISCHE PATENTSCHRIFT

(11) **EP 1 221 906 B2**
(45) Veröffentlichungstag und Bekanntmachung des Hinweises auf die Entscheidung über den Einspruch: **06.03.2013**
(45) Hinweis auf die Patenterteilung: 14.02.2007
(21) Anmeldenummer: 00965717.2
(22) Anmeldetag: 18.10.2000
(51) Int. Cl.: A61C 17/34

(54) **ZAHNBÜRSTE MIT VIBRIERENDEM KOPFTEIL**
TOOTHBRUSH WITH VIBRATING HEAD PART
BROSSE A DENTS EQUIPEE D'UNE PARTIE DE TETE VIBRANTE

(30) Priorität: 19.10.1999 DE 19950204; 03.11.1999 DE 29919053 U
(43) Veröffentlichungstag der Anmeldung: 17.07.2002
(60) Teilanmeldung: 05000197.3
(73) Patentinhaber: Trisa Holding AG, 6234 Triengen (CH)
(72) Erfinder: HÄFLIGER, Peter, CH-6234 Triengen (CH); FISCHER, Franz, CH-6234 Triengen (CH); ELSTER, Günther, 89312 Günzburg (DE)
(74) Vertreter: Steinegger, Peter
(86) Internationale Anmeldenummer: PCT/CH2000/000563
(87) Internationale Veröffentlichungsnummer: WO 2001/028452

(56) Entgegenhaltungen:
- EP-A- 0 850 602
- EP-A1- 0 704 180
- EP-A2- 0 850 602
- GB-A- 2 250 428
- US-A- 3 685 080
- US-A- 3 685 080
- US-A- 5 165 131

## Beschreibung

Die Erfindung betrifft eine Zahnbürste gemäss dem Oberbegriff des Anspruches 1.

Eine solche Zahnbürste ist aus GB-A-2 250 428 bekannt.

Für die Zahnreinigung werden heutzutage entweder herkömmliche Handzahnbürsten oder Elektrozahnbürsten, bei denen ein beweglicher Bürstenkopf motorisch vom Handgriff her antreibbar ist, verwendet. Mit den letzteren wird in der Regel eine intensivere Reinigungswirkung erreicht als mit den Handzahnbürsten, sie weisen jedoch den Nachteil auf, dass sie relativ voluminös und teuer sind, das Zahnfleisch verletzen und eine starke Abrasion des Zahnschmelzes verursachen können.

Der vorliegenden Erfindung liegt die Aufgabe zugrunde, eine kostengünstige Zahnbürste zu schaffen, die in ihrer Grösse etwa den herkömmlichen Handzahnbürsten entspricht und dennoch eine diesen gegenüber verbesserte Reinigungswirkung ermöglicht.

Diese Aufgabe wird erfindungsgemäss durch eine Zahnbürste mit den Merkmalen des Anspruches 1 gelöst.

Dadurch, dass eine den Kopfteil in Schwingung versetzende mechanische Vibrationsvorrichtung in einem an den Kopfteil angrenzenden Bereich eines den Kopfteil mit dem Handgriff verbindenden Halsteiles untergebracht ist, die über im Halsteil verlaufende elektrische Verbindungen mit einer im Handgriff untergebrachten Energiequelle wirkverbunden ist, wobei in bevorzugter Weise zur Verhinderung einer Vibrationsübertragung auf den Handgriff schwingungsdämpfende Mittel vorgesehen sind, wird erreicht, dass sich die die verbesserte Reinigungswirkung bewirkenden Vibrationen in erster Linie im Kopfteil entfalten und im Handgriff nur geringfügig zu verspüren sind, wodurch eine angenehme Handhabung der Zahnbürste erreicht wird. Ein weiterer Vorteil der erfindungsgemässen Zahnbürste besteht darin, dass durch den flexiblen Halsteil keine mechanischen Antriebsmittel zu der Vibrationsvorrichtung geführt werden müssen. Durch den Halsteil verlaufen lediglich die als Drähte, Kabel oder elektrisch leitende Kunststoffbahnen ausgebildeten elektrischen Verbindungen.

Bevorzugte Weiterausgestaltungen der erfindungsgemässen Zahnbürste bilden den Gegenstand der abhängigen Ansprüche.

Die Erfindung wird nun anhand der Zeichnung näher erläutert.

Es zeigen rein schematisch: .
- Fig. 1: in Seitenansicht und teilweise im Schnitt ein erstes Ausführungsbeispiel einer nicht erfindungsgemässen Zahnbürste und einen Handgriff-Verschlussteil voneinander getrennt (ohne Batterie);
- Fig. 2: in Unteransicht und teilweise im Schnitt ein zweites Ausführungsbeispiel einer erfindungsgemässen Zahnbürste im zusammengesetzten Zustand;
- Fig. 3: in Seitenansicht und teilweise im Schnitt die Zahbürste nach Fig. 2 und den Verschlussteil voneinander getrennt (ohne Batterie);
- Fig. 4: in Seitenansicht ein drittes Ausführungsbeispiel einer nicht erfindungsgemässen Zahnbürste im zusammengesetzten Zustand; und
- Fig. 5: einen vorderen Teil der Zahnbürste nach Fig. 4 mit verschiedenen Ausführungsformen auswechselbarer Behandlungsköpfe.

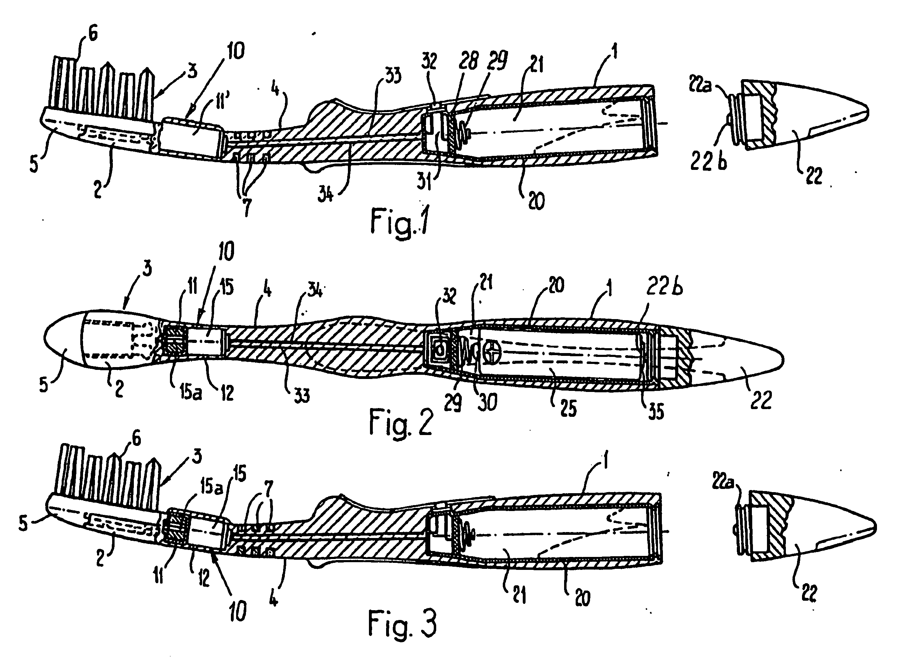

Sowohl die in Fig. 1 dargestelte Zahnbürste als auch diejenige nach Fig. 2 und 3 weist jeweils einen Handgriff 1, einen vorderen, borstentragenden Kopfteil 3 sowie einen den Kopfteil 3 mit dem Handgriff 1 verbindenden Halsteil 4 auf. Die zu Borstenbüscheln 6 zusammengefassten Borsten sind in einem Borstenträger 5 verankert und bilden mit ihren freistehenden Enden eine gegebenenfalls profilierte Bürstfläche. Bei der dargestellten Ausführungsform ist der Borstenträger 5 mit den Borstenbüscheln 6 in einer an sich bekannten und daher nicht näher beschriebenen Weise auswechselbar auf einen Halteteil 2 des Kopfteiles 3 aufgesetzt.

Der Halsteil 4 ist mit Halsteilzonen 7 aus einer elastisch nachgiebigeren Materialkomponente versehen, die die Elastizität des Halsteiles 4 bewirken oder zusätzlich steigern, so dass der borstentragende Kopfteil 3 beim Gebrauch der Zahnbürste bei einer Einwirkung von Kräften in Richtung gegen die Bürstfläche federelastisch zurückdrängbar ist. Gegebenenfalls sind die Halsteilzonen 7 als sich über einen Teil des Halsumfanges erstreckende, mit einem elastisch nachgiebigen Material (z.B. mit thermoplastischem Elastomer) gefüllte Einkerbungen ausgebildet. Eine andere Form und Anzahl von Halsteilzonen wäre selbstverständlich durchaus denkbar. Eine flexible Halszone ist auch ohne Verwendung von elastischen Materialkomponeneten denkbar, z.B. durch Einschnürungen oder durch einen Balg.

Im an den Kopfteil 3 angrenzenden Bereich des Halsteiles 4 ist eine mechanische Vibrationsvorrichtung 10 integriert, mittels welcher dem borstentragenden Kopfteil 3 die Zahnreinigung bewirkende oder verstärkende Vibrationen erteilt werden können. Die Vibrationsvorrichtung 10 ist über im Halsteil 4 verlaufende elektrische Verbindungen an eine im Handgriff 1 untergebrachte elektrische Energiequelle anschliessbar, wie anschliessend beschrieben wird. Die bereits erwähnten Halsteilzonen 7 aus einem elastisch nachgiebigen Material wirken dabei als die Schwingung zwischen dem vibrierenden Kopfteil 3 und dem Handgriff 1 dämpfende Mittel, so dass sich die Vibrationswirkung vor allem im Kopfteil entfaltet und nur geringfügig auf den Handgriff 1 übertragen wird. Dies bedeutet, dass während des Zahnreinigungsvorganges nur geringfügige Schwingungen im Handgriff 1 zu verspüren sind, und dadurch die Handhabung der Zahnbürste angenehm ist. Aber auch umgekehrt ist es von Vorteil, dass die erzeugte Vibration durch den Handgriff 1 nicht gedämpft wird und sich im Kopfteil 3 voll auswirken kann. Anstelle der aus elastisch nachgiebigem Material bestehenden Halsteilzonen 7 wären allerdings auch andere schwingungsdämpfende Mittel denkbar; es muss nicht unbedingt ein elastisches Material eingesetzt werden. Die Dämpfung kann auch unter Verwendung eines Grundmaterials durch besondere Formgestaltung des Halsteiles erreicht werden, beispielsweise durch Vorhandensein eines Balg/Ziehharmonika- Teiles etc.

Im Handgriff 1 ist eine sich in seiner Längsrichtung erstreckende Kapsel bzw. Hülse 20 aus elektrisch leitendem Material untergebracht. Sowohl der Handgriff 1 als auch die Hülse 20 sind nach hinten offen, so dass ein durch einen Verschlussteil 22 von hinten verschliessbarer Hohlraum 21 gebildet ist, in den eine Batterie 25, beim dargestellten Ausführungsbeispiel eine handelsübliche, nicht wiederaufladbare Stiftbatterie mit einer definierten Leistung (z.B. 1,5 V) als Energiequelle für die Vibrationsvorrichtung 10 einsetzbar ist. Als Energiequelle könnte allerdings auch eine Knopfbatterie oder eine wiederaufladbare Akku-Zelle Verwendung finden.

In der Hülse 20 ist an einer Querwand 28 ein Federkontakt 29 für den Plus-Pol 30 der Batterie 25 (vgl. Fig. 2) angebracht, der über eine elektrische Leitung 31, einen in der Hülse 20 eingebauten und von der Aussenseite des Handgriffes 1 betätigbaren Schalter 32 und eine im Halsteil 4 verlaufende elektrische Leitung 33 an die Vibrationsvorrichtung 10 angeschlossen ist. Mittels des Schalters 32 kann die elektrische Verbindung unterbrochen werden.

Der Verschlussteil 22 ist mit einem Gewindezapfen 22a aus einem elektrisch leitenden Material ausgestattet und mit diesem in den Handgriff 1 bzw. in die Hülse 20 einschraubbar. Der Gewindezapfen 22a ist mit einer Kontaktfläche 22b versehen, die beim eingeschraubten Verschlussteil 22 am Minus-Pol 35 der in die Hülse 20 eingesetzten Batterie 25 zur Anlage kommt. Die elektrische Verbindung des Minus-Pols 35 mit der Vibrationsvorrichtung 10 erfolgt über den Gewindezapfen 22a, die Hülse 20 selber und eine die Hülse 20 an die Vibrationsvorrichtung 10 anschliessende, im Halsteil 4 verlaufende Leitung 34.

Anstatt über die elektrisch leitende Hülse 20 könnte die Stromübertragung auch anders erfolgen, beispielsweise unter Verwendung von Drähten oder eines elektrisch leitenden Kunststoffes.

Bei dem in Fig. 1 dargestellten, nicht erfindungsgemässen Ausführungsbeispiel umfasst die Vibrationsvorrichtung 10 ein vorzugsweise in der Art eines Schwingungsankers funktionierendes Vibrationselement 11', das über die Leitungen 33, 34 direkt mit der Energiequelle elektrisch verbindbar ist und bei angeschlossener Energiequelle in Vibrationen versetzt wird.

Bei der in Fig. 2 und 3 dargestellten erfindungsgemässen Zahbürsten-Variante besteht die Vibrationsvorrichtung 10 aus einem Vibrationselement 11 in Form eines mechanische Vibrationen erzeugenden, um eine in Längsrichtung der Zahnbürste liegende Achse drehbaren Exzenters und aus einem unmittelbar angrenzend angeordneten, als Mikromotor 15 ausgebildeten Antrieb. Das Vibrationselement 11 ist mit der Welle 15a des über die Leitungen 33, 34 mit der Energiequelle elektrisch verbindbaren Mikromotors 15 verbunden. Der Mikromotor 15 und der Exzenter können als eine Baueinheit in einem Gehäuse 12 untergebracht werden.

Die elektrischen Leitungen 31, 33, 34 könnten auch mit Elektrizität leitenden Kunststoffbahnen realisiert werden.

Beim die Leitungen 31, 33 verbindenden oder unterbrechenden Schalter 32 kann es sich beispielsweise auch um einen Magnetschalter handeln.

Die bevorzugte Ausgestaltung des Schalters 32 beinhaltet jedoch einen auf einem Print angeordneten Impulsschalter und weitere elektronische Komponenten, welche den Schaltzustand speichern.

Die elektrische Verbindung zwischen der Batterie 25 und dem Vibrationselement 11' (Fig. 1) oder dem Antrieb 15 (Fig. 2 und 3) kann aber auch statt durch den Schalter 32 durch Drehen des in den Handgriff 1 bzw. in die Hülse 20 einschraubbaren oder mit diesen bajonettartig verbindbaren Verschlussteiles 22 bewerkstelligt oder unterbrochen werden (d.h. bei einer solchen Ausführung entfällt der Schalter 32).

Statt der Schraubverbindung des hinteren Verschlussteils 22 mit dem Handgriff 1 wäre selbstverständlich auch eine andere lösbare Verbindung (z.B. Steckverbindung, Bajonettverbindung etc.) und eine entsprechende Ausgestaltung des mit dem Minus-Pol 35 zusammenwirkenden Kontaktteils möglich.

Der Verschlussteil 22 könnte auch eine durchaus andere Form aufweisen, als in der Zeichnung dargestellt. Beispielsweise könnte der Verschlussteil mit einer Abstellfläche bzw. einem Fussteil ausgestattet sein und somit als ein Element zum Aufstellen der Zahnbürste dienen.

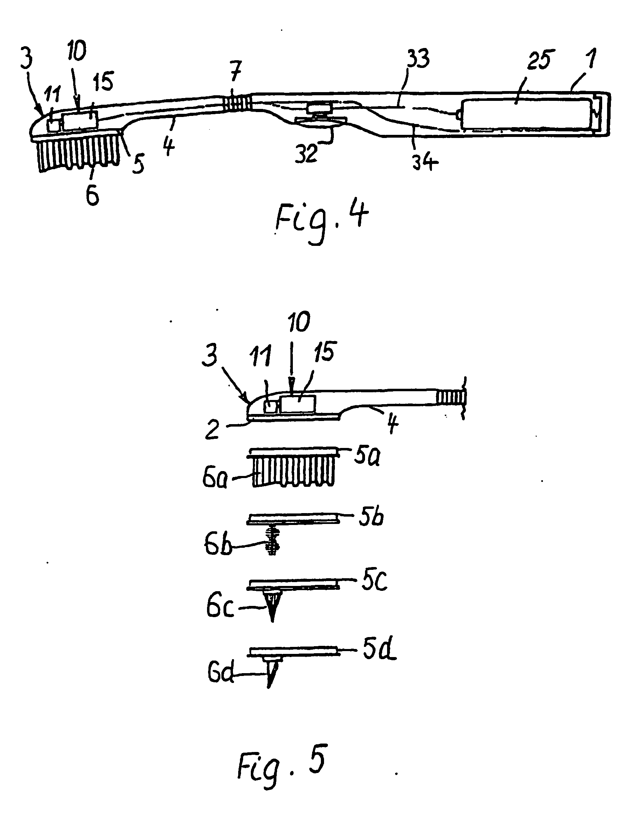

Die in Fig. 4 dargestellte, nicht erfindungsgemässe Zahnbürste entspricht im wesentlichen derjenigen nach Fig. 2 und 3; die gleichen Teile sind wiederum mit den gleichen Bezugsziffern bezeichnet. Gemäss Fig. 4 ist die Vibrationsvorrichtung 10 direkt im vorderen Kopfteil 3 angeordnet. Bei diesem Ausführungsbeispiel entfällt die Hülse 20; die Batterie 25 ist direkt über die Leitungen 33, 34 mit der Vibrationsvorrichtung 10 verbunden. Auch bei dieser Zahnbürste wird vorzugsweise ein auf einen Halteteil 2 des Kopfteiles 3 z.B. in der Art einer Schnappverbindung aufsetzbarer, auswechselbarer Borstenträger 5 verwendet. Die Auswechselbarkeit des mit den Borstenbüscheln 6 versehenen Borstenträgers 5 ist von besonderem Vorteil, da die mit der Vibrationsvorrichtung 10 ausgestattete Zahnbürste unabhängig von der Lebensdauer der Borsten, die in der Regel sogar kleiner ist als die Lebensdauer der Batterie 25, verwendet werden kann.

Wie aus Fig. 5 ersichtlich können dabei statt des Borstenträgers 5 bzw. 5a, der einen Teil eines konventionellen Bürstenkopfes bildet und mit Borstenbüscheln 6 bzw. 6a versehen ist, wahlweise verschiedene andere Borstenträger bzw. Adapter 5b bis 5d auf den Halteteil 2 aufgesetzt werden, die mit verschiedenen Interdentalbürsten 6b, 6c bzw. Interdental-Behandlungsteilen 6d zur wirksamen Reinigung der Zahnzwischenräume versehen sind. Die Interdentalbürste 6b kann beispielsweise als eine Spiralbürste aus beschichtetem Draht mit eingedrehten Kunststoffilamenten ausgebildet sein. Die Interdentalbürste 6c besteht aus Borsten, die zusammen eine Bündelspitze bilden. Der Behandlungsteil 6d kann z.B. als ein eine Spitze aufweisendes Kunstoffelement ausgebildet sein, der vorzugsweise mit einer abrasiven Beschichtung zur Entfernung von Plaque und Zahnstein in den Zahnzwischenräumen versehen sein kann. Selbstverständlich könnten auch andere beliebige Behandlungsköpfe verwendet werden.

Auch bei der Variante nach Fig. 4 und 5 könnte der Borstenträger 5 derart ausgestaltet werden, dass eine vibrationsbedingte Bewegung gegenüber dem Halteteil 2 möglich wäre.

Zur Einbringung der Vibrationsvorrichtung 10, der Verbindungsleitungen 33, 34 und weiterer elektronischen Komponenten kann die erfindungsgemässe Zahnbürste bzw. ihr Gehäuse zweiteilig hergestellt und die beiden Teile nach dem Hineinlegen der vorstehend erwähnten Teile wasserdicht verschweisst werden.

Die erfindungsgemässe Zahnbürste kann aber auch vorzugsweise in einem Zwei- oder Mehrkomponenten-Spritzgiessverfahren hergestellt werden. Mit Vorteil werden dabei die vorstehend erwähnten Teile als eine Einheit in einen aus einer ersten Materialkomponente gespritzten Formteil eingelegt und danach mit der zweiten Materialkomponente (oder mit den weiteren Materialkomponenten) umspritzt. Es muss sich dabei nicht um vollständiges Umspritzen handeln. Gewisse Teile können frei liegen, wodurch eine ästhetische Wirkung erzielt werden kann.

Allerdings könnten die oben erwähnten elektronischen Komponenten auch in einen fertig gespritzten Handgriff 1 eingesetzt werden.

Dadurch, dass nicht nur das Vibrationselement 11, 11' selber sondern auch der Antrieb, d.h. der Mikromotor 15, im unmittelbar angrenzenden vorderen Bereich des Halsteiles 4 angeordnet sind, müssen keine mechanische Antriebsmittel zur Verbindung des Mikromotors mit dem Vibrationselement 11 durch den flexiblen Halsteil 4 geführt werden. Durch den Halsteil 4 verlaufen lediglich die elektrischen Leitungen 33, 34 (Drähte, Kabel oder elektrisch leitende Kunststoffbahnen).

Erfindungsgemäss wird eine mechanische Vibrationsvorrichtung 10 verwendet, die einen Durchmesser von weniger als 15 mm, vorzugsweise weniger als 6 mm aufweist, und weniger als 35 mm, vorzugsweise weniger als 20 mm lang ist. Dadurch wird gewährleistet, dass die Zahnbürste ergonomisch ausgestaltet werden kann und gut handhabbar ist. Die erfindungsgemässe Zahnbürste entspricht in ihrer Grösse ungefähr den herkömmlichen Handzahnbürsten, was eine einfachere Handhabung im Vergleich zu den auf dem Markt erhältlichen, wesentlich grösseren Elektrozahnbürsten bedeutet, und dennoch wird mit dieser Zahnbürste eine mit den bekannten Elektrozahnbürsten vergleichbare, diesen gegenüber jedoch schonendere Reinigungswirkung erreicht. Ausserdem ist die erfindungsgemässe Zahnbürste in der Herstellung einfach und kostengünstig.

## Patentansprüche

1. Zahnbürste mit einem Handgriff (1), einem borstentragenden vorderen Kopfteil (3), einem den Kopfteil (3) mit dem Handgriff (1) verbindenden Halsteil (4), einer im Handgriff (1) untergebrachten elektrischen Energiequelle (25), einer den Kopfteil (3) in Schwingung versetzenden mechanischen Vibrationsvorrichtung (10), die einen Antrieb (15) mit einer eine Drehachse festlegenden Welle (15a), auf der ein als Exzenter ausgebildetes, um die Drehachse drehbares Vibrationselement (11) sitzt, aufweist, und im Halsteil (4) verlaufenden elektrischen Verbindungen (33, 34), über die der Antrieb (15) der Vibrationsvorrichtung (10) mit der elektrischen Energiequelle (25) wirkverbunden ist, **dadurch gekennzeichnet, dass** die Welle (15a) des Antriebs (15) sich in Längsrichtung der Zahnbürste erstreckt, und die Vibrationsvorrichtung (10) im an den Kopfteil (3) angrenzenden Bereich des Halsteils (4) untergebracht ist.

2. Zahnbürste nach Anspruch 1, **dadurch gekennzeichnet, dass** der mit der Energiequelle (25) elektrisch verbindbare Antrieb (15) unmittelbar angrenzend an das Vibrationselement (11) im an den Kopfteil (3) angrenzenden Bereich des Halsteils (4) angeordnet ist.

3. Zahnbürste nach Anspruch 1 oder 2, **dadurch gekennzeichnet, dass** das Vibrationselement (11) und der Antrieb (15) in einem Gehäuse (12) untergebracht sind.

4. Zahnbürste nach einem der Ansprüche 1 bis 3, **dadurch gekennzeichnet, dass** zur Verhinderung einer Vibrationsübertragung vom Kopfteil (3) auf den Handgriff (1) schwingungsdämpfende Mittel (7) vorgesehen sind.

5. Zahnbürste nach Anspruch 4, **dadurch gekennzeichnet, dass** der Halsteil (4) im zwischen dem Vibrationselement (11) und dem Handgriff (1) liegenden Bereich schwingungsdämpfende Halsteilzonen (7) aus einem elastisch nachgiebigen Material aufweist.

6. Zahnbürste nach einem der Ansprüche 1 bis 5, **dadurch gekennzeichnet, dass** als Energiequelle eine auswechselbare Batterie (25) dient, die in den Handgriff (1) einsetzbar und mit dem Antrieb (15) direkt elektrisch verbindbar ist.

7. Zahnbürste nach Anspruch 6, **dadurch gekennzeichnet, dass** die Batterie (25) in eine Hülse (20) aus elektrisch leitendem Material einsetzbar ist, die in einem nach hinten offenen und durch einen Verschlussteil (22) von hinten verschliessbaren Handgriff-Hohlraum (21) angeordnet ist.

8. Zahnbürste nach Anspruch 7, **dadurch gekennzeichnet, dass** die elektrische Verbindung eines Batterie-Pols (30) mit dem Antrieb (15) über einen Federkontakt (29) und über vom Federkontakt (29) zum Antrieb (15) führende Leitungen (31; 33) erfolgt und die elektrische Verbindung des anderen Batterie-Pols (35) über einen Teil (22a) des mit dem Handgriff (1) in lösbarer Verbindung stehenden Verschlussteiles (22) und eine an den Antrieb (15) angeschlossene Leitung (34) bewerkstelligt wird, wobei ein Schalter (32) zum Unterbrechen einer der beiden elektrischen Verbindungen vorgesehen ist.

9. Zahnbürste nach Anspruch 8, **dadurch gekennzeichnet, dass** die vom Federkontakt (29) zum Antrieb (15) führenden Leitungen (31; 33) über den Schalter (32) miteinander verbindbar sind, wobei der Schalter (32) im Handgriff (1) eingebaut und von der Aussenseite des Handgriffes (1) betätigbar ist.

10. Zahnbürste nach Anspruch 8, **dadurch gekennzeichnet, dass** der Schalter im Verschlussteil (22) integriert und durch Verdrehen des in den Handgriff (1) einschraubbaren oder bajonettartig mit diesen verbindbaren Verschlussteils (22) betätigbar ist.

11. Zahnbürste nach einem der Ansprüche 1 bis 10, **dadurch gekennzeichnet, dass** der Kopfteil (3) einen Halteteil (2) aufweist, auf welchen ein mit Borsten versehener Borstenträger (5) auswechselbar aufgesetzt ist.

12. Zahnbürste nach einem der Ansprüche 1 bis 11, **dadurch gekennzeichnet, dass** die Vibrationsvorrichtung (10) und die elektronischen Komponenten eine Einheit bilden, die dazu bestimmt ist, in einen aus einer ersten Materialkomponente im Spritzgiessverfahren hergestellten Formteil eingelegt und mit mindestens einer weiteren Materialkomponente wenigstens teilweise umspritzt zu werden.

13. Zahnbürste nach einem der Ansprüche 1 bis 11, **dadurch gekennzeichnet, dass** die Vibrationsvorrichtung (10) und die elektronischen Komponenten eine Einheit bilden, die dazu bestimmt ist, zwischen zwei separat hergestellten Zahnbürstenteilen untergebracht zu werden, die miteinander wasserdicht verbunden, vorzugsweise verschweisst werden.

14. Zahnbürste nach einem der Ansprüche 1 bis 13, **dadurch gekennzeichnet, dass** die mechanische Vibrationsvorrichtung (10) einen Durchmesser von weniger als 15 mm, vorzugsweise weniger als 6 mm, und eine Länge von weniger als 35 mm, vorzugsweise weniger als 20 mm, aufweist.

## Claims

1. Toothbrush having a handle (1), having a front bristle-carrying head part (3), having a neck part (4), which connects the head part (3) to the handle (1), having an electrical power source (25), which is accommodated in the handle (1), having a mechanical vibratory device (10) which causes the head part (3) to vibrate, has a drive (15) with a shaft (15a), which shaft defines an axis of rotation and on which is seated a vibratory element (11), which can be rotated about this axis of rotation and is designed as an eccentric, and having electrical connections (33, 34) which run in the neck part (4) and via which the drive (15) of the vibratory device (10) is operably connected to the electrical power source (25),
**characterized in that**, the shaft of the drive (15) extends in the longitudinal direction of the toothbrush, and **in that** the vibratory device (10) is accommodated in a region of the neck part (4) adjacent to the head part (3).

2. Toothbrush according to claim 1, **characterized in that** the drive (15), which can be electrically connected to the power source (25), is arranged directly adjacent to the vibratory element (11) in the region adjacent to the head part (3).

3. Toothbrush according to claim 1 or 2, **characterized in that** the vibratory element (11) and the drive (15) are accommodated in a housing (12).

4. Toothbrush according to one of claims 1 to 3, **characterized in that** vibration-damping means (7) are provided in order to prevent vibration transmission from the head part (3) to the handle (1).

5. Toothbrush according to claim 4, **characterized in that**, in the region located between the vibratory element (11) and the handle (1), the neck part (4) has vibration-damping neck-part zones (7) made of an elastically compliant material.

6. Toothbrush according to one of claims 1 to 5, **characterized in that** the power source used is an exchangeable battery (25) which can be inserted into the handle (1) and can be electrically connected directly to the drive (15).

7. Toothbrush according to claim 6, **characterized in that** the battery (25) can be inserted into a sleeve (20) which is made of electrically conductive material and is arranged in a handle cavity (21) which is open to the rear and can be closed from the rear by a closure part (22).

8. Toothbrush according to claim 7, **characterized in that** one battery pole (30) is electrically connected to the drive (15) via a spring contact (29) and via lines (31; 33) leading from the spring contact (29) to the drive (15) and the other battery pole (35) is electrically connected via a part (22a) of the closure part (22), which is releasably connected to the handle (1), and a line (34) adjoining the drive (15), a switch (32) being provided in order to interrupt one of the two electrical connections.

9. Toothbrush according to claim 8, **characterized in that** the lines (31; 33) leading from the spring contact (29) to the drive (15) can be connected to one another via the switch (32), it being the case that the switch (32) is installed in the handle (1) and can be actuated from the outside of the handle (1).

10. Toothbrush according to claim 8, **characterized in that** the switch is integrated in the closure part (22) and can be actuated by the closure part (22), which can be screwed into the handle (1) or connected to the same in a bayonet-like manner, being turned.

11. Toothbrush according to one of claims 1 to 10, **characterized in that** the head part (3) has a retaining part (2) on which a bristle carrier (5) provided with bristles is positioned in an exchangeable manner.

12. Toothbrush according to one of claims 1 to 11, **characterized in that** the vibratory device (10) and the electronic components form a unit which is intended for being positioned in an injection molding made of a first material component and being at least partially encapsulated in at least one further material component by injection molding.

13. Toothbrush according to one of claims 1 to 11, **characterized in that** the vibratory device (10) and the electronic components form a unit which is intended for being accommodated between two separately produced toothbrush parts which are connected, preferably welded, to one another in a water-tight manner.

14. Toothbrush according to one of claims 1 to 13, **characterized in that** the mechanical vibratory device (10) has a diameter of less than 15 mm, preferably less than 6 mm, and a length of less than 35 mm, preferably less than 20 mm.

## Revendications

1. Brosse à dents comprenant un manche (1), une partie de tête avant (3) supportant les poils, une partie de col (4) assemblant la partie de tête (3) avec le manche (1), une source d'énergie électrique (25) logée dans le manche (1), un dispositif vibratoire (10) mécanique qui fait vibrer la partie de tête (3), et qui présente un entraînement (15) avec un arbre (15a), qui définit un axe de rotation et sur lequel arbre repose un élément vibratoire (11) configuré sous forme d'excentrique et tournable autour de cet axe de rotation, et des jonctions électriques (33, 34) s'étendant dans la partie de col (4), par l'intermédiaire desquelles l'entraînement (15) du dispositif vibratoire (10) est en liaison active avec la source d'énergie électrique (25), **caractérisé en ce que** l'arbre (15a) de l'entraînement (15) s'étend dans la direction longitudinale de la brosse à dents, et le dispositif vibratoire (10) est logé dans la zone limitrophe à la partie de tête (3) de la partie de col (4).

2. Brosse à dents suivant la revendication 1, **caractérisé en ce que** l'entraînement (15), pouvant être relié électriquement à la source d'énergie (25), est disposé immédiatement de façon immédiatement limitrophe à l'élément vibratoire (11) dans la zone limitrophe à la partie de tête (3) de la partie de col (4).

3. Brosse à dents suivant l'une des revendications 1 et 2, **caractérisé en ce que** l'élément vibratoire (11) et l'entraînement (15) sont logés dans un boîtier (12).

4. Brosse à dents suivant l'une des revendications 1 à 3, **caractérisé en ce que** des moyens amortisseurs (7) sont prévus pour empêcher une transmission des vibrations de la partie de tête (3) au manche (1).

5. Brosse à dents suivant la revendication 4, **caractérisé en ce que** la partie de col (4) présente dans la région située entre l'élément vibratoire (11) et le manche (1) des zones de partie de col (7) amortissant les vibrations en un matériau flexible élastiquement.

6. Brosse à dents suivant l'une des revendications 1 à 5, **caractérisé en ce qu'**une pile sert de source d'énergie, laquelle pile peut être logée dans le manche (1) et qui peut être reliée électriquement à l'entraînement (15).

7. Brosse à dents suivant la revendication 6, **caractérisé en ce que** la pile (25) peut être logée dans une gaine (20) en matériau électriquement conducteur, qui est disposée dans un espace creux (21) du manche ouvert vers l'arrière et obturable de l'arrière par un élément de fermeture (22).

8. Brosse à dents suivant la revendication 7, **caractérisé en ce que** la liaison électrique d'un pôle de pile (30) avec l'entraînement (15) s'effectue par l'intermédiaire d'un contact à ressort (29) et de lignes (31 ; 33) menant du contact à ressort (29) à l'entraînement (15), et la liaison électrique de l'autre pôle de pile (35) est réalisée par l'intermédiaire d'une partie (22a) de l'élément de fermeture (22) en liaison amovible avec le manche (1) et d'une ligne (34) raccordée à l'entraînement (15), un interrupteur (32) étant alors prévu pour la coupure de l'une des deux jonctions électriques.

9. Brosse à dents suivant la revendication 8, **caractérisé en ce que** les lignes (31 ; 33) menant du contact à ressort (29) à l'entraînement (15) sont reliées entre elles par l'intermédiaire de l'interrupteur (32), le interrupteur (32) étant alors incorporé dans le manche (1) et étant actionnable à partir du côté extérieur du manche (1).

10. Brosse à dents suivant la revendication 8, **caractérisé en ce que** le interrupteur est intégré dans l'élément de fermeture (22) et peut être actionné par rotation de l'élément de fermeture (22), qui peut être vissé dans le manche (1) ou assemblé avec ce dernier à la manière d'un joint à baïonnette.

11. Brosse à dents suivant l'une des revendications 1 à 10, **caractérisé en ce que** la partie de tête (3) présente un élément de retenue (2), sur lequel est placé de façon interchangeable un support de poils (5) muni de poils.

12. Brosse à dents suivant l'une des revendications 1 à 11, **caractérisé en ce que** le dispositif vibratoire (10) et les composants électroniques forment une unité, destinée à être inséré dans une pièce moulée fabriquée en un premier composant de matériau dans le procédé de moulage par injection et à être enrobée, au moins en partie, par au moins un autre composant de matériau.

13. Brosse à dents suivant l'une des revendications 1 à 11, **caractérisé en ce que** le dispositif vibratoire (10) et les composants électroniques forment une unité, destinée à être logée entre deux parties de brosse à dents fabriquées séparément, qui sont assemblées entre elles de façon étanche à l'eau, de préférence soudées.

14. Brosse à dents suivant l'une des revendications 1 à 13, **caractérisé en ce que** le dispositif vibratoire mécanique (10) présente un diamètre de moins de 15 mm, de préférence de moins de 6 mm, et une longueur de moins de 35 mm, de préférence de moins de 20 mm.
